# EUROPÄISCHE PATENTSCHRIFT

(11) **EP 0 932 762 B1**
(45) Veröffentlichungstag und Bekanntmachung des Hinweises auf die Patenterteilung: **01.12.2004**
(21) Anmeldenummer: 98934816.4
(22) Anmeldetag: 28.05.1998
(51) Int. Cl.: F04B 1/04

(54) **ROHRFÖRMIGER KOLBEN UND VERSCHLUSSTOPFEN FÜR EINE RADIALKOLBENPUMPE, HERGESTELLT DURCH KALTUMFORMEN**
TUBULAR PISTON PRODUCED BY COLD FORMING AND CLOSURE PLUG FOR PUMP WITH RADIAL PISTONS
PISTON TUBULAIRE PRODUIT PAR FORMAGE A FROID ET BOUCHON DE FERMETURE POUR UNE POMPE A PISTONS RADIAUX

(30) Priorität: 30.07.1997 DE 19732811; 17.11.1997 DE 19750851
(43) Veröffentlichungstag der Anmeldung: 04.08.1999
(73) Patentinhaber: ROBERT BOSCH GMBH, 70442 Stuttgart (DE)
(72) Erfinder: MERKLEIN, Dieter, D-87435 Kempten (DE); WEH, Andreas, D-87471 Durach (DE); HELLEBRANDT, Michael, D-87545 Burgberg (DE)
(86) Internationale Anmeldenummer: PCT/DE1998/001458
(87) Internationale Veröffentlichungsnummer: WO 1999/006697

(56) Entgegenhaltungen:
- EP-A- 0 637 690
- DE-A- 19 752 545
- US-A- 5 231 916

## Beschreibung

### Stand der Technik

Die Erfindung betrifft eine Kolbenpumpe mit den Merkmalen des Oberbegriffs des Anspruchs 1, die zur Verwendung als Rückförderpumpe für eine schlupfgeregelte Fahrzeugbremsanlage vorgesehen ist.

Derartige Kolbenpumpen sind an sich bekannt. Beispielhaft sei auf eine in der DE-40 27 794 A1 offenbarte Kolbenpumpe verwiesen. Die bekannte Kolbenpumpe weist ein Pumpengehäuse auf, in welchem ein zu einer hin- und hergehenden Hubbewegung antreibbarer Kolben axial verschieblich aufgenommen ist. Der Kolben ist ein spanend durch Bohren und Drehen gefertigtes Teil. Zum Fluideinlaß weist der Kolben der bekannten Kolbenpumpe eine Axialbohrung auf, die ungefähr bis zur Mitte des Kolbens reicht und von einer Querbohrung gekreuzt wird. An einer Mündung der Axialbohrung an einem Stirnende des Kolbens ist ein spanend hergestellter Ventilsitz für ein Rückschlagventil angebracht, das bei der bekannten Kolbenpumpe ein Einlaßventil bildet. Der Kolben ist ein spanend durch Bohren und Drehen gefertigtes Teil. Die Herstellung des Kolbens ist aufwendig und kostenintensiv.

Diese Ausführungen gelten entsprechend für den aus der EP 0 637 690 A1 bekannten Pumpenkolben.

Darüber hinaus ist aus der US 5,231,916 ein Bremskolben bekannt, der umformtechnisch durch Kaltverformung hergestellt ist. Dieser Kolben ist als zu einer Seite hin offener Hohlkörper ausgebildet und wird im Unterschied zum Gegenstand vorliegender Erfindung nicht von Druckmittel durchströmt. Demnach kommt dieser Kolben ohne Durchströmkanal und ohne Ventilsitz für ein den Durchströmkanal steuerndes Rückschlagventil aus.

### Vorteile der Erfindung

Der Kolben der erfindungsgemäßen Kolbenpumpe ist ein Umformteil, das beispielsweise durch Kaltschlagen oder Fließpressen hergestellt ist. In einem Arbeitsgang mit der Herstellung des Kolbens wird auch ein Durchströmkanal beispielsweise in Form eines Axiallochs zum Fluidein- oder -auslaß spanlos gefertigt. Ebenso wird ein Ventilsitz eines Rückschlagventils, das ein Ein- oder Auslaßventil der erfindungsgemäßen Kolbenpumpe bilden kann, in einem Arbeitsgang mit der Herstellung des Kolbens an den Kolben angeformt. Der Ventilsitz kann beispielsweise an einer Mündung des Durchströmkanals an einem Stirnende des Kolbens oder beispielsweise auch an einer Ringstufe innerhalb des Durchströmkanals am Kolben angeformt sein. Die spanlose Herstellung des Ventilsitzes durch Umformen hat den Vorteil einer Materialverfestigung, wobei Maßhaltigkeit und Materialfestigkeit durch ein abschließendes Prägen oder Nachprägen des Ventilsitzes erhöht werden können. Wird der Kolben mit Gleitringen im Pumpengehäuse geführt, erübrigt sich eine Nachbearbeitung einer Umfangsoberfläche des Kolbens durch Feindrehen, Schleifen, Hohnen oder dgl.

Die erfindungsgemäße Kolbenpumpe hat den Vorteil, daß ihr Kolben vollkommen spanlos durch Umformen in einem Arbeitsgang oder in wenigen Umformschritten herstellbar ist. Der Kolben ist dadurch schnell und kostengünstig herstellbar, es entsteht kein Materialabfall. Ebenso erübrigt sich eine Nachbearbeitung der Kolbenoberfläche oder ein spanendes Anbringen von Bohrungen, Nuten oder dgl., die bei der Kolbenherstellung zusätzliche Bearbeitungsschritte und Bearbeitungsmaschinen erfordern würden. Der durch Umformen verfestigte Ventilsitz hat zudem den Vorteil höherer Verschließfestigkeit und einer damit verlängerten Lebensdauer.

Die Unteransprüche haben vorteilhafte Ausgestaltungen und Weiterbildungen der im Hauptanspruch angegebenen Erfindung zum Gegenstand.

Die erfindungsgemäße Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

### Zeichnung

Die Erfindung wird nachfolgend anhand eines in der Zeichnung dargestellten Ausführungsbeispiels näher erläutert. Es zeigen:
- Figur 1: einen Achsschnitt einer erfindungsgemäßen Kolbenpumpe,
- Figur 2: eine Stirnansicht eines rohrförmigen Kolbenteils gemäß Pfeil II in Figur 1 und
- Figur 3: eine Stirnansicht eines Verschlußstopfens des Kolbens gemäß Pfeil III in in Figur 1.

### Beschreibung des Ausführungsbeispiels

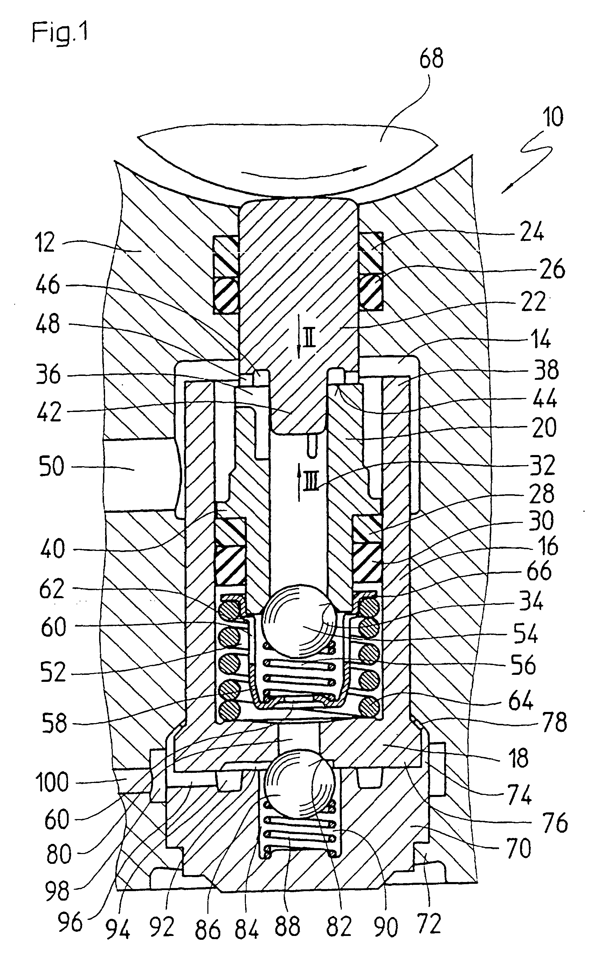

Die in Figur 1 dargestellte, erfindungsgemäße Kolbenpumpe 10 ist in einen Hydraulikblock 12 eingesetzt, von dem in der Zeichnung nur ein die Kolbenpumpe 10 umgebendes Bruchstück dargestellt ist. In den Hydraulikblock 12 sind weitere, nicht dargestellte hydraulische Bauelemente, wie beispielsweise Magnetventile, Hydrospeicher und Dämpfer einer schlupfgeregelten Fahrzeugbremsanlage eingesetzt und durch den Hydraulikblock 12 miteinander und mit der Kolbenpumpe 10 hydraulisch verschaltet. Der Hydraulikblock 12 bildet ein Pumpengehäuse der erfindungsgemäßen Kolbenpumpe 10 und wird nachfolgend als Pumpengehäuse 12 bezeichnet.

In eine gestufte, durchgehende Bohrung 14 im Pumpengehäuse 12 ist eine Laufbuchse 16 eingepreßt. Die rohrförmige Laufbuchse 16 weist einen mit ihr einstückigen Laufbuchsenboden 18 auf. In der Laufbuchse 16 ist ein Kolben 20, 22 axial verschieblich aufgenommen. Der Kolben 20, 22 steht über einen Teil seiner Länge aus der Laufbuchse 16 vor. Er ist an seinem aus der Laufbuchse 16 vorstehenden Teil mittels eines Gleitrings 24 im Pumpengehäuse 12 axial verschieblich geführt und mittels eines Dichtrings 26 im Pumpengehäuse 12 abgedichtet. Der Gleitring 24 und der Dichtring 26 sind in eine gemeinsame Nut eingesetzt, die in der gestuften Bohrung 14 im Pumpengehäuse 12 angebracht ist.

Ein in der Laufbuchse 16 befindliches Ende des Kolbens 20, 22 ist mittels eines am Kolben 20, 22 angebrachten Gleitrings 28 in der Laufbuchse 16 geführt und mittels eines am Kolben 20, 22 angebrachten Dichtrings 30 in der Laufbuchse abgedichtet.

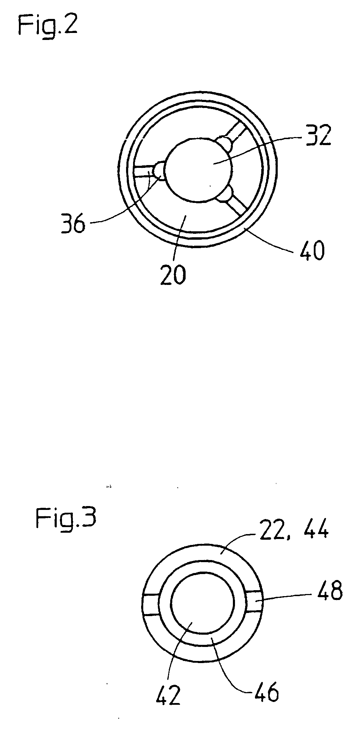

Der Kolben der erfindungsgemäßen Kolbenpumpe 10 ist aus zwei Teilen zusammengesetzt, einem rohrförmigen Kolbenteil 20 und einem mit einem Stirnende des Kolbenteils 20 fest verbundenen Verschlußstopfen 22. Das Kolbenteil 20 weist ein durchgehendes Axialloch 32 auf, an dessen dem Laufbuchsenboden 18 zugewandter Mündung ein konischer Ventilsitz 34 ausgebildet ist. An einem dem Ventilsitz 34 abgewandten Stirnende des Kolbenteils 20, an dem der Verschlußstopfen 22 angebracht ist, weist das Kolbenteil 20 drei über den Umfang verteilt angeordnete Nuten 36 auf, die einen Stirnrand 38 des Kolbenteils 20 radial durchsetzen und sich axial entlang einer Innenseite des rohrförmigen Kolbenteils 20 über ca. 1/4 bis 1/3 der Länge des Kolbenteils 20 fortsetzen. Die sich entlang der Innenseite des Kolbenteils 20 erstreckenden Nuten 36 sind also zum Axialloch 32 des Kolbenteils 20 hin offen. Aus der in Figur 2 dargestellten Stirnansicht des Kolbenteils 20 ist die Anordnung der Nuten 36 ersichtlich.

Ungefähr in seiner Längsmitte weist das Kolbenteil 20 an seiner Außenseite einen Radialbund 40 als Anlage für den am Kolben 20, 22 angebrachten Gleitring 28 und über den Gleitring 28 für den Dichtring 30 auf. Das Kolbenteil 20 ist ein spanlos durch Fließpressen hergestelltes Umformteil. Es ist einschließlich des Ventilsitzes 34, der Nuten 36 und dem Radialbund 40 ausschließlich durch Umformen hergestellt, eine spanende Bearbeitung oder Nachbearbeitung findet nicht statt. Der Ventilsitz 34 kann durch Prägen oder Nachprägen an- oder nachgeformt sein. Das Prägen oder Nachprägen dient der Materialverfestigung und einer Verbesserung der Maßhaltigkeit des Ventilsitzes 34. Die Nuten 36 und der Radialbund 40 sind durch Fließpressen beim Herstellen des Kolbenteils 20 geformt, für ihre Herstellung ist kein gesonderter Arbeitsgang erforderlich. Das Kolbenteil 20 weist keinerlei Hinterschneidungen oder dgl. auf, so daß er sich als Umformteil durch Fließpressen ohne Nachbearbeitung herstellen läßt.

Der Verschlußstopfen 22, dessen Stirnansicht in Figur 3 dargestellt ist, ist ein zylindrisches Teil mit einem mit ihm einstückigen, koaxialen, kurzen Zapfen 42 an einer Stirnseite. Mit dem Zapfen 42 ist der Verschlußstopfen 22 in das Axialloch 32 des Kolbenteils 20 eingepreßt, zwischen dem Zapfen 42 und dem Kolbenteil 20 besteht eine Preßpassung, durch die das Kolbenteil 20 und der Verschlußstopfen 22 fest miteinander verbunden sind.

In einer Ringstirnfläche 44 am Übergang vom Zapfen 42 zum Verschlußstopfen 22, mit der der Verschlußstopfen 22 am Kolbenteil 20 anliegt, ist eine den Zapfen 42 umgebende Nut 46 umlaufend angebracht, von der zwei Radialnuten 48 radial nach außen verlaufen. Die Radialnuten 48 und die umlaufende Nut 46 im Verschlußstopfen 22 sowie die drei Nuten 36 und das Axialloch 32 im Kolbenteil 22, die alle miteinander kommunizieren, bilden einen Durchströmkanal des Kolbens 20, 22, an dessen dem Laufbuchsenboden 18 zugewandter Mündung der Ventilsitz 34 ausgebildet ist. Der Durchströmkanal 32, 36, 46, 48 dient im dargestellten Ausführungsbeispiel einer erfindungsgemäßen Kolbenpumpe 10 dem Fluideinlaß. Der Durchströmkanal 32, 36, 46, 48 kann allerdings ebensogut zum Fluidauslaß dienen, wenn eine Durchströmrichtung eines Einlaßventils und eines Auslaßventils und damit die Durchströmung der Kolbenpumpe 10 gegenüber dem dargestellten Ausführungsbeispiel umgekehrt wird.

Der Fluideinlaß der Kolbenpumpe 10 erfolgt durch eine Einlaßbohrung 50 im Pumpengehäuse 12, die radial in die gestufte Bohrung 14 des Pumpengehäuses 12 mündet, in welche die Laufbuchse 16 eingepreßt ist, und weiter um den Stirnrand 38 der Laufbuchse 16 herum in die Laufbuchse 16 hinein und von dort durch den am Umfang des Kolbens 20, 22 offenen Durchströmkanal 32, 36, 46, 48 zum Ventilsitz 34, also zu dem dem Laufbuchsenboden 18 zugewandten Stirnende des Kolbens 20, 22.

Es ist nicht notwendig, daß sowohl die Radialnuten 48 und die umlaufende Nut 46 im Verschlußstopfen 22 angebracht sind und die Nuten 36 im Kolbenteil 20 dieses radial durchsetzen, es genügt, wenn entweder die Radialnuten 48 und die umlaufende Nut 46 im Verschlußstopfen 22 angebracht sind und die Nuten 36 im Kolbenteil 20 axial in die umlaufende Nut 46 münden. Sofern die Nuten 36 im Kolbenteil 20 dieses radial durchsetzen, kann auf die Radialnuten 48 und die umlaufende Nut 46 im Verschlußstopfen 22 verzichtet werden. In jedem Fall ist eine Durchströmung des Kolbens 20, 22 von dessen Umfang zum Ventilsitz 34 gewährleistet. Die Nuten 36 im Kolbenteil 20 sind in axialer Richtung länger als der Zapfen 42 des Verschlußstopfens 22, so daß auch an dieser Stelle eine Durchströmung des Kolbens 20, 22 gewährleistet ist.

Der Verschlußstopfen 22 weist keinerlei Hinterschneidung auf, so daß er ebenso wie das Kolbenteil 20 als Umformteil beispielsweise durch Fließpressen oder Kaltschlagen herstellbar ist. Auch kann eine Nadel eines Nadellagers als Verschlußstopfen 22 Verwendung finden, die als Massenteil preisgünstig erhältlich ist. Dies bietet sich insbesondere dann an, wenn im Verschlußstopfen 22 keine Radialnuten 48 und keine umlaufende Nut 46 vorgesehen werden.

Als Einlaßventil 52 weist die erfindungsgemäße Kolbenpumpe 10 ein Rückschlagventil auf, das an dem dem Laufbuchsenboden 18 zugewandten Stirnende des Kolbens 20, 22 angebracht ist. Das Einlaßventil 52 weist eine Ventilkugel 54 als Ventilschließkörper auf, die von einer Schraubendruckfeder als Ventilschließfeder 56 gegen den Ventilsitz 34 am Kolben 20, 22 gedrückt wird. Die Ventilkugel 54 und die Ventilschließfeder 56 sind in einem napfförmigen Ventilkäfig 58 untergebracht, der als Blechtiefziehteil hergestellt ist und Fluiddurchlässe 60 am Umfang und im Boden aufweist. Die Ventilschließfeder 56 stützt sich am Ventilkäfig 58 ab. Mit einer Ringstufe 62 an seiner offenen Stirnseite liegt der Ventilkäfig 58 an dem ihm zugewandten Stirnende des Kolbens 20, 22 an. Der Ventilkäfig 58 wird von einer Kolbenrückstellfeder 64 in Anlage am Kolben 20, 22 gehalten, die gegen einen Radialflansch 66 drückt, der an einem freien Rand des Ventilkäfigs 58 ausgebildet ist. Der Radialflansch 66 dient zugleich als Anlage für den Dichtring 30 und hält diesen zusammen mit dem Gleitring 28 auf dem Kolben 20, 22. Die Kolbenrückstellfeder 64 ist eine Schraubendruckfeder, die in die Laufbuchse 16 eingesetzt ist und sich an dem Laufbuchsenboden 18 abstützt. Die Kolbenrückstellfeder 64 ist erheblich stärker ausgebildet als die Ventilschließfeder 56.

Zum Antrieb des Kolbens 20, 22 weist die erfindungsgemäße Kolbenpumpe 10 in an sich bekannter Weise einen elektromotorisch rotierend antreibbaren Exzenter 68 auf, der an einer dem Einlaßventil 52 abgewandten Stirnseite des Kolbens 20, 22 im Pumpengehäuse 12 angeordnet ist und gegen dessen Umfang der Kolben 20, 22 von der Kolbenrückstelifeder 64 gedrückt wird.

Auf einer dem Exzenter 68 abgewandten Seite ist ein zylindrisches Verschlußteil 70 in die Bohrung 14 im Pumpengehäuse 12 eingesetzt. Das Verschlußteil 70 ist durch eine umlaufende Verstemmung 72 des Pumpengehäuses 12 fixiert und verschließt die Bohrung 14 druckdicht. Zur Verbindung mit der Laufbuchse 16 weist das Verschlußteil 70 einen mit ihm einstückigen, in axialer Richtung abstehenden zylindrischen Rand 74 auf, der einen über einen Umfang überstehenden Bund 76 der Laufbuchse 16 in axialer Richtung übergreift und nach innen umgebördelt ist (Bördel 78).

Im Laufbuchsenboden 18 ist ein Mittelloch 80 angebracht, an dessen dem Kolben 20, 22 abgewandter Mündung ein konischer Ventilsitz 82 eines Auslaßventils 84 der erfindungsgemäßen Kolbenpumpe 10 ausgebildet ist. Das Auslaßventil 84 weist eine Ventilkugel 86 als Ventilschließkörper auf, die von einer Schraubendruckfeder als Ventilschließfeder 88 gegen den Ventilsitz 82 gedrückt wird. Das Auslaßventil 84 ist in einem Sackloch 90 im Verschlußteil 70 untergebracht. Ein Fluidauslaß der Kolbenpumpe 10 erfolgt durch drei sternförmig im Laufbuchsenboden 18 angebracht, flache und breite Nuten 92, die in eine Ringnut 94 im Verschlußteil 70 münden, von der drei Radialnuten 96 sternförmig nach außen führen. Die Radialnuten 96 im Verschlußteil 70 kommunizieren über einen in der Bohrung 14 im Pumpengehäuse 12 angebrachten Ringkanal 98 mit einer Auslaßbohrung 100 im Pumpengehäuse 12.

## Patentansprüche

1. Kolbenpumpe, insbesondere für eine Fahrzeugbremsanlage, mit einem Pumpengehäuse, in dem ein zu einer hin- und hergehenden Hubbewegung antreibbarer Kolben axial verschieblich aufgenommen ist, der einen Durchströmkanal (32, 36) zu einem Fluidein- oder auslaß und einen an einem Stirnende vorgesehenen Ventilsitz (34) eines Rückschlagventils (52), das ein Rückströmen durch den Durchströmkanal (32, 36) ein- oder ausgeströmten Fluids verhindert, aufweist, **dadurch gekennzeichnet, dass** der Kolben ein rohrförmig ausgebildetes Umformteil (20) und einen mit dem, dem Ventilsitz (34) gegenüberliegenden Stirnende des Umformteils (20) verbundenen Verschlussstopfen (22) aufweist, der das Umformteil (20) verschließt und dass der Kolben (20, 22) eine Nut (36) aufweist, die zwischen dem Umformteil (20) und dem Verschlussstopfen (22) angeordnet ist und einen Teil des Durchströmkanals (32, 36) bildet.

2. Kolbenpumpe nach Anspruch 1, **dadurch gekennzeichnet, dass** der Kolben (20,22) einen Gleitring (24,28) zur Führung im Pumpengehäuse (12) aufweist.

3. Kolbenpumpe nach Anspruch 1 oder 2, **dadurch gekennzeichnet, dass** das Umformteil (20) durch Kaltumformen, insbesondere durch Kaltschlagen oder Fließpressen hergestellt ist.

4. Kolbenpumpe nach einem der Ansprüche 1 bis 3, **dadurch gekennzeichnet, dass** die Nut (36) durch Kaltumformen gebildet ist.

5. Kolbenpumpe nach Anspruch 1, **dadurch gekennzeichnet, dass** das Rückschlagventil (52) am Kolben (20, 22) angebracht ist.

## Claims

1. Piston pump, in particular for a vehicle brake system, with a pump casing which receives axially displaceably a piston which is capable of. being driven in a to-and-fro lifting movement and which has a throughflow duct (32, 36) to a fluid inlet or outlet and a valve seat (34), provided on one end face, of a non-return valve (52) which prevents a backflow of flowed-in or flowed-out fluid, through the throughflow duct (32, 36), **characterized in that** the piston has a tubularly designed formed part (20) and a closing plug (22) which is connected to that end face of the formed part (20) which is located opposite the valve seat (34), the said closing plug closing the formed part (20), and the piston (20, 22) has a groove (36) which is arranged between the formed part (20) and the closing plug (22) and which forms part of the throughflow duct (32, 36).

2. Piston pump according to Claim 1, **characterized in that** the piston (20, 22) has a sliding ring (24, 28) for guidance in the pump casing (12).

3. Piston pump according to Claim 1 or 2, **characterized in that** the formed part (20) is produced by cold forming, in particular by cold upsetting or extrusion.

4. Piston pump according to one of Claims 1 to 3, **characterized in that** the groove (36) is produced by cold forming.

5. Piston pump according to Claim 1, **characterized in that** the non-return valve (52) is mounted on the piston (20, 22).

## Revendications

1. Pompe à piston, notamment pour un système de freinage de véhicule, comprenant un corps de pompe recevant un piston coulissant axialement et entraîné suivant un mouvement alternatif, ce piston ayant un canal de passage (32, 36) vers une entrée ou une sortie de fluide ainsi qu'un siège de soupape (34) prévu à l'extrémité frontale pour un clapet anti-retour (52) évitant le retour du fluide d'entrée et de sortie à travers le canal de passage (32, 36),
**caractérisée en ce que**
le piston est une pièce (20) tubulaire obtenue par formage, et ayant un bouchon (22) relié à l'extrémité frontale de la pièce de formage (20), à l'opposé du siège de soupape (34), ce bouchon fermant la pièce de formage (20), et
le piston (20, 22) comporte une rainure (36) entre la pièce de formage (20) et le bouchon (22) et faisant partie du canal de passage (32, 36).

2. Pompe à piston selon la revendication 1,
**caractérisée en ce que**
le piston (20, 22) comporte une bague de glissement (24, 28) pour le guidage dans le corps de pompe (12).

3. Pompe à piston selon la revendication 1 ou 2,
**caractérisée en ce que**
la pièce de formage (20) est fabriquée par formage à froid, notamment par forgeage à froid ou fluage à la presse.

4. Pompe à piston selon l'une des revendications 1 à 3,
**caractérisée en ce que**
la rainure (36) est obtenue par formage à froid.

5. Pompe à piston selon la revendication 1,
**caractérisée en ce que**
le clapet anti-retour (52) est installé sur le piston (20, 22).
